# EUROPEAN PATENT APPLICATION

(11) **EP 4 353 404 A1**
(43) Date of publication of application: **17.04.2024**
(21) Application number: 22861054.9
(22) Date of filing: 28.07.2022
(51) Int. Cl.: B23K 35/30, B23K 35/362

(54) **METAL-CORED WIRE FOR SUBMERGED ARC WELDING AND SUBMERGED ARC WELDING METHOD USING SAME**

(30) Priority: 26.08.2021 JP 2021138072
(71) Applicant: JFE Steel Corporation, Tokyo 100-0011 (JP)
(72) Inventor: ANDO, Akiyoshi, Tokyo 100-0011 (JP); TAKADA, Atsushi, Tokyo 100-0011 (JP); WATANABE, Kazufumi, Tokyo 100-0011 (JP); OKABE, Takatoshi, Tokyo 100-0011 (JP)
(74) Representative: Grünecker Patent- und Rechtsanwälte PartG mbB
(86) International application number: PCT/JP2022/029180
(87) International publication number: WO 2023/026763

(57) **Abstract**

An object is to provide a submerged arc welding wire that generates less fumes at the time of welding and can form a weld metal with high strength and excellent cryogenic toughness to find suitable use as a welding material for high-Mn content steel materials for use in cryogenic environments.

A metal-cored wire for submerged arc welding contains specific components.

## Description

### Technical Field

The present invention relates to a metal-cored wire for submerged arc welding, particularly to a metal-cored wire suited for submerged arc welding of high-Mn content steel materials used in cryogenic environments, and to a submerged arc welding method using the same.

### Background Art

Environmental regulations are more rigorous in recent years. The demand is increasing for liquefied natural gas (hereinafter, also written as "LNG") that does not contain sulfur and is thus regarded as a clean fuel without emission of air pollutants, such as sulfides and oxides. To ensure that LNG can be transported or stored, LNG transportation or storage containers (tanks) are required to maintain excellent cryogenic impact toughness at or below a temperature of -162°C that is the liquefaction temperature of LNG. To satisfy excellent cryogenic impact toughness that is required, for example, aluminum alloys, 9% Ni steel, and austenite stainless steel are conventionally used as materials for containers and other purposes.

However, aluminum alloys have low tensile strength and entail increasing of the thickness of a structure that is designed. Aluminum alloys are also low in welding workability. Furthermore, 9% Ni steel is economically disadvantageous because expensive Ni-based materials should be used as welding materials. Furthermore, austenite stainless steel has drawbacks in that it is expensive and the strength of the base material is low.

Due to these problems, recent studies of materials for LNG transportation or storage containers are directed to high-Mn content steel materials containing 10 to 35 mass% Mn (hereinafter, also written as "high-Mn steels"). High-Mn steels are characterized in that the metallic microstructure is an austenite phase and does not undergo brittle fracture even at a cryogenic temperature, and also in that the steels have high strength compared to austenite stainless steel. Thus, there are demands for the development of welding materials capable of stably welding such high-Mn steels.

To meet such demands, for example, Patent Literature 1 discloses a flux-cored arc welding wire that has a composition including, in wt%, C: 0.15 to 0.8%, Si: 0.2 to 1.2%, Mn: 15 to 34%, Cr: 6% or less, Mo: 1.5 to 4%, S: 0.02% or less, P: 0.02% or less, B: 0.01% or less, Ti: 0.09 to 0.5%, N: 0.001 to 0.3%, TiO₂: 4 to 15%, a total of one or more selected from SiO₂, ZrO₂, and Al₂O₃: 0.01 to 9%, a total of one or more selected from K, Na, and Li: 0.5 to 1.7%, and one or more of F and Ca: 0.2 to 1.5%, the balance being Fe and incidental impurities. Patent Literature 1 describes that welding with the flux-cored arc welding wire disclosed therein can effectively produce a welded joint that has excellent low-temperature toughness with an absorbed energy of 28 J or more in a Charpy impact test at a test temperature of -196°C and has high strength with a room-temperature tensile strength of 400 MPa or more. Furthermore, it is described that the welded joint can attain excellent hot cracking resistance by virtue of the Mo content in the wire composition being controlled to 1.5% or more.

Furthermore, Patent Literature 2 discloses a gas metal arc welding solid wire that has a basic composition including, in mass%, C: 0.2 to 0.8%, Si: 0.15 to 0.90%, Mn: 17.0 to 28.0%, P: 0.03% or less, S: 0.03% or less, Ni: 0.01 to 10.00%, Cr: 0.4 to 4.0%, Mo: 0.01 to 3.50%, B: less than 0.0010%, and N: 0.12% or less, the balance being Fe and incidental impurities. Where necessary, the solid wire contains one, or two or more selected from V, Ti, and Nb, and one, or two or more selected from Cu, Al, Ca, and REM. Patent Literature 2 describes that welding with the gas metal arc welding solid wire disclosed therein generates less fumes and can produce a high-strength welded joint that has high strength with a room-temperature yield strength (0.2% proof stress) of 400 MPa or more and has excellent cryogenic impact toughness with an absorbed energy (vE-₁₉₆) of 28 J or more in a Charpy impact test at a test temperature of -196°C.

### Citation List

### Patent Literature

PTL 1: Japanese Patent No. 6240778
PTL 2: Japanese Patent No. 6621572

### Summary of Invention

### Technical Problem

However, studies of the present inventors have shown that welding according to the technique described in Patent Literature 1 generates large amounts of fumes.

Furthermore, the technique described in Patent Literature 2 has a problem in that when the welding heat input is increased to execute highly efficient welding, the crystal grains undergo coarsening to cause a decrease in strength, in particular, a failure to satisfy a yield strength of 400 MPa or more.

An object of the present invention is to solve the problems in the art discussed above and to provide a submerged arc welding wire that generates less fumes at the time of welding and can form a weld metal with high strength and excellent cryogenic toughness to find suitable use as a welding material for high-Mn content steel materials for use in cryogenic environments.

Here, the phrase "generate less fumes at the time of welding" means that the fume emission rate during welding is 400 mg/min or less as measured in accordance with JIS Z3930-2013. Furthermore, the term "high strength" means that the room-temperature yield strength (0.2% proof stress) of a weld metal produced in accordance with the provisions of JIS Z3111 is 400 MPa or more. Furthermore, the term "excellent cryogenic toughness" means that the absorbed energy (vE-₁₉₆) of a weld metal produced in accordance with the provisions of JIS Z3111 is 28 J or more in a Charpy impact test at a test temperature of -196°C.

### Solution to Problem

In order to achieve the above object, the present inventors carried out extensive studies first on factors that would affect the fume emission rate during welding. As a result, the present inventors have found that submerged arc welding (SAW) is a welding process effective for effectively reducing the fume emission rate even in high-efficiency welding at a high current.

When, however, high-Mn steel is welded by submerged arc welding that involves a large heat input while using a conventional welding material, the crystal grains in the weld metal undergo coarsening to cause a decrease in 0.2% proof stress.

To solve this problem, the present inventors have found that a welding material containing 3.5% or more molybdenum can satisfy specified 0.2% proof stress even when the crystal grains are coarsened. The present inventors have further found that the addition of 3.5% or more molybdenum significantly lowers wire drawability and makes the production of solid wires difficult, and is therefore effectively applied to metal-cored wires that are easy to produce.

The present invention has been completed based on the above findings and further studies. A summary of the present invention is as follows.
[1] A metal-cored wire for submerged arc welding having a composition including, in mass%:
   C: 0.20 to 0.80%,
   Si: 0.15 to 0.90%,
   Mn: 17.0 to 28.0%,
   P: 0.030% or less,
   S: 0.030% or less,
   Ni: 0.01 to 10.00%,
   Cr: 0.4 to 4.0%,
   Mo: 3.50 to 10.00%,
   B: 0.0010% or less, and
   N: 0.200% or less, the balance being Fe and incidental impurities.
[2] The metal-cored wire for submerged arc welding described in [1], wherein the composition further includes, in mass%, one, or two or more selected from:
   V: 0.040% or less,
   Ti: 0.040% or less, and
   Nb: 0.040% or less.
[3] The metal-cored wire for submerged arc welding described in [1] or [2], wherein the composition further includes, in mass%, one, or two or more selected from:
   Cu: 1.00% or less,
   Al: 0.100% or less, and
   REM: 0.020% or less.
[4] A submerged arc welding method including welding workpieces of a steel material with the metal-cored wire for submerged arc welding described in any one of [1] to [3], the steel material being a high-Mn steel having a composition including, in mass%:
   C: 0.20 to 0.80%,
   Si: 0.15 to 0.90%,
   Mn: 15.0 to 30.0%,
   P: 0.030% or less,
   S: 0.030% or less,
   Ni: 3.00% or less, and
   Cr: 1.0 to 8.0%, the balance being Fe and incidental impurities,
   the steel material having an absorbed energy at -196°C of 28 J or more and a 0.2% proof stress of 400 MPa or more.
[5] The submerged arc welding method described in [4], wherein the composition of the steel material further includes, in mass%, one, or two or more selected from:
   V: 2.0% or less,
   Ti: 1.0% or less,
   Nb: 1.0% or less,
   Al: 0.100% or less,
   N: 0.120% or less,
   O: 0.0050% or less,
   B: 0.0020% or less, and
   REM: 0.020% or less.
[6] The submerged arc welding method described in [4] or [5], wherein the fume emission rate during the submerged arc welding is 400 mg/min or less.

### Advantageous Effects of Invention

The metal-cored wire for submerged arc welding provided according to the present invention is a welding material for high-Mn content steel materials that is excellent in wire producibility, generates less fumes when applied to submerged arc welding, and can form a weld metal having high strength and excellent cryogenic toughness even when a large heat is input to the welding, thus attaining significant effects in industry.

### Description of Embodiments

Hereinafter, embodiments according to the present invention will be described in detail.

The present invention pertains to a submerged arc welding method for high-Mn content steel materials. First, submerged arc welding (hereinafter, also written as "SAW") will be described.

### [Submerged arc welding]

The SAW is a welding process in which an electrode wire is continuously fed into a granular flux supplied beforehand on a base material, and an arc is struck between the tip of the electrode wire and the base material to weld them continuously. The SAW is advantageous in that welding can be performed efficiently by applying a large current to increase the deposition rate of the wire.

For example, the wire that is used is a solid wire or a flux-cored wire that includes a wire flux within the wire. In the present invention, a metal-cored wire is used.

In exemplary submerged arc welding according to the present invention, workpieces of a steel material are butted against each other to form a 45° single V groove; a flux is supplied; the wire provided (diameter: 3.2 mmϕ) is fed in a flat position; and the workpieces are welded without preheating under conditions in which current: 350 to 650 A (AC), voltage: 28 to 36 V, welding speed: 20 to 80 cm/min, welding heat input: 0.7 to 8.0 kJ/mm, and interpass temperature: 100 to 150°C.

Under the submerged arc welding conditions described above, the high-Mn steel workpieces as the base material are butted against each other, and a weld metal that forms a welded joint is produced using the metal-cored wire according to the present invention described later and a welding flux.

### [Basic composition of metal-cored wires]

The reasons will be described as to why the basic composition of the metal-cored wire of the present invention is limited. Hereinafter, "%" in the composition means "mass%".

### [C: 0.20 to 0.80%]

Carbon is an element that acts to increase the strength of the weld metal by solid solution strengthening. Furthermore, carbon stabilizes austenite phases and enhances the cryogenic impact toughness of the weld metal. In order to obtain these effects, 0.20% or more carbon needs to be added. Thus, the C content is limited to 0.20% or more.

The C content is preferably 0.30% or more. The C content is more preferably 0.40% or more. The C content is still more preferably 0.45% or more. If, however, the content exceeds 0.80%, carbides are precipitated to lower cryogenic toughness and increase the probability of hot cracking at the time of welding. Thus, the C content is limited to 0.80% or less. The C content is preferably 0.70% or less. The C content is more preferably 0.60% or less. The C content is still more preferably 0.55% or less.

### [Si: 0.15 to 0.90%]

Silicon acts as a deoxidizing agent to increase the Mn yield and also increases the viscosity of the molten metal to effectively allow for maintaining of the bead shape stably and to reduce the occurrence of spatters. In order to obtain these effects, 0.15% or more silicon needs to be added. Thus, the Si content is limited to 0.15% or more. The Si content is preferably 0.20% or more. The Si content is more preferably 0.30% or more. The Si content is still more preferably more than 0.30%. If the content exceeds 0.90%, the cryogenic toughness of the weld metal is lowered. Furthermore, silicon undergoes segregation during solidification to form liquid phases at interfaces of solidified cells, thus causing a decrease in hot cracking resistance. Thus, the Si content is limited to 0.90% or less. The Si content is preferably 0.80% or less. The Si content is more preferably 0.70% or less. The Si content is still more preferably 0.60% or less.

### [Mn: 17.0 to 28.0%]

Manganese is an element that stabilizes austenite phases at low cost, and needs to be contained at 17.0% or more in the present invention. If the Mn content is less than 17.0%, ferrite phases are formed in the weld metal to cause a significant decrease in cryogenic toughness. Thus, the Mn content is limited to 17.0% or more. The Mn content is preferably 18.0% or more. The Mn content is more preferably 20.0% or more. The Mn content is still more preferably 21.0% or more. If, on the other hand, the Mn content exceeds 28.0%, excessive Mn segregation occurs during solidification to induce hot cracking. Thus, the Mn content is limited to 28.0% or less. The Mn content is preferably 26.0% or less. The Mn content is more preferably 24.0% or less.

### [P: 0.030% or less]

Phosphorus is an element that is segregated at grain boundaries to induce hot cracking. It is therefore preferable in the present invention to remove as much phosphorus as possible. Up to 0.030% phosphorus is acceptable. Thus, the P content is limited to 0.030% or less. The P content is more preferably 0.020% or less. Excessive dephosphorization raises the refining cost. Thus, the P content is preferably controlled to 0.003% or more.

### [S: 0.030% or less]

Sulfur is segregated at grain boundaries and forms a low-melting compound to increase the probability of hot cracking. It is preferable in the present invention to remove as much sulfur as possible. Up to 0.030% sulfur is acceptable. Thus, the S content is limited to 0.030% or less. The S content is preferably 0.020% or less. Excessive desulfurization raises the refining cost. Thus, the S content is preferably controlled to 0.001% or more.

### [Ni: 0.01 to 10.00%]

Nickel is an element that strengthens austenite grain boundaries, and is segregated at grain boundaries to enhance cryogenic impact toughness. In order to obtain these effects, the Ni content needs to be 0.01% or more. The Ni content is preferably 1.00% or more. The Ni content is more preferably 1.50% or more. The Ni content is still more preferably 1.80% or more. Furthermore, nickel also has an effect of stabilizing austenite phases. Thus, an increase in the Ni content leads to the stabilization of austenite phases and enhances the cryogenic impact toughness of the weld metal. However, increasing the Ni content in excess of 10.00% is economically disadvantageous because of the expensiveness of the element. Thus, the Ni content is limited to 10.00% or less. The Ni content is preferably 8.00% or less. The Ni content is more preferably 4.00% or less. The Ni content is still more preferably 2.50% or less.

### [Cr: 0.4 to 4.0%]

Chromium is an element that acts to stabilize austenite phases at cryogenic temperatures and enhances the cryogenic impact toughness of the weld metal. Furthermore, chromium also acts to enhance the strength of the weld metal. Furthermore, chromium raises the liquidus line of the molten metal and effectively acts to eliminate or reduce the occurrence of hot cracking. Furthermore, chromium also acts effectively to increase the corrosion resistance of the weld metal. In order to obtain these effects, 0.4% or more chromium needs to be added. If the Cr content is less than 0.4%, the above effects cannot be ensured. Thus, the Cr content is limited to 0.4% or more. The Cr content is preferably 0.5% or more. The Cr content is more preferably 0.8% or more. The Cr content is still more preferably 1.0% or more. If, on the other hand, the content exceeds 4.0%, chromium carbide is formed to cause a decrease in cryogenic toughness. Furthermore, the formation of carbide lowers workability at the time of wire drawing. Thus, the Cr content is limited to 4.0% or less. The Cr content is preferably 3.5% or less. The Cr content is more preferably 3.0% or less. The Cr content is still more preferably 2.0% or less.

### [Mo: 3.50 to 10.00%]

Molybdenum is an element that strengthens austenite grain boundaries, and is segregated at grain boundaries to enhance the strength of the weld metal. These effects become marked when the content is 3.50% or more. Furthermore, more than 3.50% molybdenum enhances the 0.2% proof stress by solid solution strengthening. Thus, the Mo content is limited to 3.50% or more. The Mo content is preferably 4.00% or more. When the content is more than 5.00%, the carbide is precipitated and makes greater contribution to the enhancement in 0.2% proof stress. Thus, the Mo content is more preferably 5.00% or more. The Mo content is most preferably 6.00% or more. If, on the other hand, the content exceeds 10.00%, the carbide is excessively precipitated to cause a decrease in cryogenic toughness. Thus, the Mo content is limited to 10.00% or less. The Mo content is preferably 9.00% or less. The Mo content is more preferably 8.00% or less. The Mo content is still more preferably 7.00% or less.

### [B: 0.0010% or less]

Boron is segregated at grain boundaries of the weld metal to strengthen the grain boundaries, thereby effectively enhancing toughness and proof stress. These effects become marked when the content is 0.0005% or more. Thus, the B content is preferably 0.0005% or more. If, on the other hand, the content is excessively high, boron carbonitride is precipitated at grain boundaries possibly to cause deterioration in toughness. Thus, the B content is limited to 0.0010% or less.

### [N: 0.200% or less]

Nitrogen is an element that is incidentally mixed. Similarly to carbon, this element effectively contributes to the enhancement in the strength of the weld metal and also stabilizes austenite phases to stably enhance cryogenic toughness. These effects become marked when the content is 0.010% or more. Thus, the N content is preferably 0.010% or more. The N content is more preferably 0.050% or more. The N content is still more preferably 0.100% or more. If, however, the content exceeds 0.200%, nitrides are formed to lower low-temperature toughness. Thus, the N content is limited to 0.200% or less. The N content is preferably 0.150% or less.

### [Optional components in composition of metal-cored wires]

The composition described above is the basic composition of the metal-cored wire of the present invention. In addition to the basic composition, the metal-cored wire of the present invention may further include, as required, one, or two or more optional components selected from V: 0.040% or less, Ti: 0.040% or less, and Nb: 0.040% or less, and may further include, as required, one, or two or more optional components selected from Cu: 1.00% or less, Al: 0.100% or less, and REM: 0.020% or less.

Vanadium, titanium, and niobium are elements that easily form carbides and contribute to the enhancement in the strength of the weld metal. One, or two or more of them may be selected and added as required.

### [V: 0.040% or less]

Vanadium is a carbide-forming element and is precipitated as fine carbide to contribute to the enhancement in the strength of the weld metal. In order to obtain these effects, it is desirable to add 0.001% or more vanadium. Thus, when vanadium is added, the V content is preferably 0.001% or more. The V content is more preferably 0.005% or more. If, however, the content exceeds 0.040%, the carbide is coarsened and causes a decrease in cryogenic toughness. Thus, when vanadium is added, the V content is limited to 0.040% or less. The V content is preferably 0.010% or less.

### [Ti: 0.040% or less]

Similarly, titanium is a carbide-forming element and is precipitated as fine carbide to contribute to the enhancement in the strength of the weld metal. Furthermore, titanium is precipitated as carbide at interfaces of solidified cells of the weld metal, and thereby contributes to the elimination or reduction of the occurrence of hot cracking. In order to obtain these effects, it is desirable to add 0.001% or more titanium. Thus, when titanium is added, the Ti content is preferably 0.001% or more. The Ti content is more preferably 0.005% or more. If, however, the content exceeds 0.040%, the carbide is coarsened and causes a decrease in cryogenic toughness similarly to the case of vanadium. Thus, when titanium is added, the Ti content is limited to 0.040% or less. The Ti content is preferably 0.020% or less. The Ti content is more preferably 0.010% or less.

### [Nb: 0.040% or less]

Similarly, niobium is a carbide-forming element and is precipitated as fine carbide to contribute to the enhancement in the strength of the weld metal. Furthermore, niobium is precipitated as carbide at interfaces of solidified cells of the weld metal, and thereby contributes to the elimination or reduction of the occurrence of hot cracking. In order to obtain these effects, it is desirable to add 0.001% or more niobium. Thus, when niobium is added, the Nb content is preferably 0.001% or more. The Nb content is more preferably 0.005% or more. If, however, the content exceeds 0.040%, the carbide is coarsened and causes a decrease in cryogenic toughness similarly to the case of vanadium and titanium. Thus, when niobium is added, the Nb content is limited to 0.040% or less. The Nb content is preferably 0.030% or less.

Meanwhile, copper is an element that contributes to austenite stabilization. Aluminum is an element that enhances welding workability, Rare earth metals are elements that contribute to workability enhancement. One, or two or more of these elements may be selected and added as required. The reasons why their contents are limited will be described below.

### [Cu: 1.00% or less]

Copper is an element that stabilizes austenite phases, and stabilizes austenite phases even at cryogenic temperatures to enhance the cryogenic impact toughness of the weld metal. In order to obtain these effects, it is desirable to add 0.01% or more copper. Thus, when copper is added, the Cu content is preferably 0.01% or more. However, adding more than 1.00% copper lowers hot ductility. Thus, when copper is added, the Cu content is limited to 1.00% or less. The Cu content is preferably 0.60% or less. The Cu content is more preferably 0.50% or less.

### [Al: 0.100% or less]

Aluminum acts as a deoxidizing agent and has an important action to increase the viscosity of the molten metal and thereby to allow for maintaining of the bead shape stably and to reduce the occurrence of spatters. Furthermore, aluminum raises the liquidus line temperature of the molten metal and contributes to the elimination or reduction of the occurrence of hot cracks in the weld metal. These effects are marked when the content is 0.005% or more. Thus, the Al content is preferably 0.005% or more. The Al content is more preferably 0.010% or more. The Al content is still more preferably 0.020% or more. If, however, the content exceeds 0.100%, the viscosity of the molten metal is so increased that more spattering occurs and the bead does not spread to increase the probability of defects, such as fusion failure. Thus, when aluminum is added, the Al content is limited to 0.100% or less. The Al content is preferably 0.060% or less. The Al content is more preferably 0.050% or less.

### [REM: 0.020% or less]

REM indicates rare earth metals, such as Sc, Y, La, and Ce. They are powerful deoxidizing agents and are present in the form of REM oxides in the weld metal. The REM oxides serve as nucleus formation sites at the time of solidification, and thereby reduce the grain size and contribute to the enhancement in the strength of the weld metal. These effects are marked when the content is 0.001% or more. Thus, when rare earth metals are added, the REM content is preferably 0.001% or more. The REM content is more preferably 0.005% or more. If, however, the content exceeds 0.020%, the arc stability is lowered. Thus, when rare earth metals are added, the REM content is limited to 0.020% or less. The REM content is preferably 0.015% or less.

### [Balance of composition]

The balance of the composition described above is Fe and incidental impurities. Examples of the incidental impurities include O (oxygen), Sn, Sb, As, Pb, and Bi. It is preferable that the amount of O (oxygen) in the wire be 0.15% or less, the amounts of Sn, Sb, and As be each 0.005% or less, and the amounts of Pb and Bi be each 0.0001% or less. The metal-cored wire may contain incidental impurity elements other than those described above as long as the basic composition and the composition of the optional components described hereinabove are satisfied. Such embodiments are also within the technical scope of the present invention.

### [Wire production methods]

Next, a method for producing the SAW metal-cored wire according to the present invention will be described.

The metal-cored wire of the present invention may be produced by a common method for producing a metal-cored wire and, for example, is preferably produced as follows. A steel sheet (thickness: 0.5 mm) as a steel sheath material that has a composition including 0.1% C, 0.2% Si, 0.5% Mn, and the balance of Fe is subjected to cold bending in the width direction to form a U shape. Subsequently, a metal powder (and a flux powder) that have been conditioned so that the target wire composition will be obtained is sealed in the steel sheath. The steel sheath is then cold drawn to give a metal-cored wire (diameter: 3.2 to 4.0 mm).

The chemical composition of the metal powder may be obtained by conditioning the metal powder or the alloy powder so that supplementary metal components will be added to the chemical composition of the steel sheath material so as to achieve in total the composition of the metal-cored wire.

### [Welding fluxes]

The welding flux that is used may be a commonly known fused flux or bonded flux. For example, the bonded flux may contain such chemical components as SiO₂: 10 to 60%, CaO: 10 to 60%, MgO: 20 to 70%, Al₂O₃: 10 to 60%, CaF₂: 5 to 30%, and CaCO₃: 2 to 20%. However, the welding flux used in the present invention is not limited to the above flux. Incidentally, the bonded flux is preferably dried (200 to 300°C) before welding.

### [Methods for producing weld metals]

A method will be described for producing a weld metal by submerged arc welding of workpieces of a steel material as a base material using the metal-cored wire for submerged arc welding described hereinabove.

The metal-cored wire having the chemical composition described hereinabove is provided. Workpieces of a steel material described later are butted against each other, and the welding flux described hereinabove is supplied. Welding is then performed using the wire under welding conditions described later to produce a weld metal.

Edge preparation is performed so that the workpieces of the steel material that are to be welded will have a predetermined groove shape. The shape of the groove that is formed is not particularly limited. Examples include normal single V grooves, single bevel grooves, double V grooves, and double bevel grooves for welded steel structures.

### [Steel materials]

The steel material as the base material is a high-Mn content steel material. For example, the high-Mn content steel material may be produced by subjecting a steel material obtained through the conventional steelmaking and casting processes to hot rolling under controlled conditions, such as heating conditions and rolling reduction ratio, and cooling the steel material (the steel sheet).
For example, the thickness of the rolled steel sheet is 6 to 100 mm.

The high-Mn content steel material is preferably a cryogenic high-strength steel material having a Mn content of 15.0 to 30.0%. Specifically, the high-Mn content steel material may be a steel material that has a basic composition including C: 0.20 to 0.80%, Si: 0.15 to 0.90%, Mn: 15.0 to 30.0%, P: 0.030% or less, S: 0.030% or less, Ni: 3.00% or less, and Cr: 1.0 to 8.0%, the balance being Fe and incidental impurities, and that may further contain as required, in addition to the basic composition, one, or two or more optional components selected from V: 2.0% or less, Ti: 1.0% or less, Nb: 1.0% or less, Al: 0.100% or less, N: 0.120% or less, O (oxygen): 0.0050% or less, B: 0.0020% or less, and REM: 0.020% or less.

### [Basic composition of steel materials]

The basic composition of the high-Mn steel material to be welded according to the present invention will be described.

### [C: 0.20 to 0.80%]

Carbon is an inexpensive and important element that acts to stabilize austenite phases. In order to obtain this effect, 0.20% or more carbon needs to be added. Thus, the C content is limited to 0.20% or more. The C content is preferably 0.40% or more. If, on the other hand, the content exceeds 0.80%, chromium carbide is excessively formed to cause a decrease in cryogenic impact toughness. Thus, the C content is limited to 0.80% or less. The C content is preferably 0.60% or less.

### [Si: 0.15 to 0.90%]

Silicon is an element that acts as a deoxidizing agent and contributes to increasing the strength of the steel material by being dissolved in the steel to effect solid solution strengthening. In order to obtain these effects, 0.15% or more silicon needs to be added. Thus, the Si content is limited to 0.15% or more. The Si content is preferably 0.30% or more. If, on the other hand, the content exceeds 0.90%, welding workability is lowered.
Thus, the Si content is limited to 0.90% or less. The Si content is preferably 0.60% or less.

### [Mn: 15.0 to 30.0%]

Manganese is a relatively inexpensive element that acts to stabilize austenite phases. In the present invention, this element is important for achieving high strength and excellent cryogenic toughness at the same time. In order to obtain these effects, 15.0% or more manganese needs to be added. Thus, the Mn content is limited to 15.0% or more. The Mn content is preferably 20.0% or more. On the other hand, adding more than 30.0% manganese results in the saturation of the effect of enhancing the cryogenic toughness and is economically disadvantageous because the effect appropriate to the amount added cannot be expected. If, furthermore, the content is as large as more than 30.0%, welding workability and cuttability are lowered, and segregation is promoted to increase the probability of the occurrence of stress corrosion cracks. Thus, the Mn content is limited to 30.0% or less. The Mn content is more preferably 26.0% or less.

### [P: 0.030% or less]

Phosphorus is an element that is segregated as an impurity at grain boundaries to serve as origins of stress corrosion cracks. It is therefore desirable in the present invention to remove as much phosphorus as possible. Up to 0.030% phosphorus is acceptable. Thus, the P content is limited to 0.030% or less. The P content is preferably 0.028% or less, and more preferably 0.024% or less. On the other hand, extreme dephosphorization to less than 0.002% entails prolonged refining and raises the refining cost. Thus, the P content is preferably 0.002% or more from an economical viewpoint.

### [S: 0.030% or less]

In the steel, sulfur is present as sulfide inclusions and lowers the ductility and the cryogenic toughness of the steel material and the weld metal. It is therefore desirable to remove as much sulfur as possible. Up to 0.030% sulfur is acceptable. Thus, the S content is limited to 0.030% or less. The S content is preferably 0.010% or less. On the other hand, extreme desulfurization to less than 0.0005% entails prolonged refining and raises the refining cost. Thus, the S content is preferably 0.0005% or more from an economical viewpoint.

### [Ni: 3.00% or less]

Nickel is an element that strengthens austenite grain boundaries, and is segregated at grain boundaries to enhance cryogenic impact toughness. In order to obtain these effects, 0.01% or more nickel is preferably added. Furthermore, nickel also has an effect of stabilizing austenite phases. Thus, an increase in the Ni content leads to the stabilization of austenite phases and enhances the cryogenic impact toughness of the weld metal. Thus, the Ni content is preferably 0.01% or more. The Ni content is more preferably 1.00% or more. However, increasing the Ni content in excess of 3.00% is economically disadvantageous because of the expensiveness of the element. Thus, the Ni content is limited to 3.00% or less.

### [Cr: 1.0 to 8.0%]

Chromium is an element that stabilizes austenite phases and effectively contributes to enhancements in cryogenic toughness and steel material strength. Furthermore, this element is effective for forming fine crystal regions. In order to obtain these effects, 1.0% or more chromium needs to be added. Thus, the Cr content is limited to 1.0% or more. The Cr content is preferably 3.5% or more. If, on the other hand, the Cr content exceeds 8.0%, chromium carbide is formed to cause a decrease in cryogenic toughness and a decrease in stress corrosion crack resistance. Thus, the Cr content is limited to 8.0% or less. The Cr content is preferably 6.5% or less.

### [Optional components in composition of steel materials]

The composition described above is the basic composition of the steel material. In addition to the basic composition, the composition of the steel material may further include one, or two optional components selected from V: 2.0% or less, Ti: 1.0% or less, Nb: 1.0% or less, Al: 0.100% or less, N: 0.120% or less, O (oxygen): 0.0050% or less, B: 0.0020% or less, and REM: 0.020% or less.

### [V: 2.0% or less]

Vanadium is an element that contributes to the stabilization of austenite phases and also contributes to the enhancements in the strength and the cryogenic toughness of the steel material. When vanadium is added in order to obtain these effects, the V content is preferably 0.001% or more. The V content is more preferably 0.003% or more. If, on the other hand, the V content exceeds 2.0%, an increased amount of coarse carbonitride is formed and serves as fracture origins to cause a decrease in cryogenic impact toughness. Thus, when vanadium is added, the V content is limited to 2.0% or less. The V content is preferably 1.7% or less. The V content is more preferably 1.5% or less.

### [Ti: 1.0% or less]

Titanium has the same effects as vanadium. If the content exceeds 1.0%, the carbide is coarsened to serve as fracture origins and also the coarsening of grains is suppressed with the result that cryogenic toughness is lowered. Thus, when titanium is added, the Ti content is limited to 1.0% or less. The Ti content is preferably 0.5% or less. The Ti content is more preferably 0.3% or less. The lower limit is not particularly limited and may be 0%.

### [Nb: 1.0% or less]

Niobium has the same effects as vanadium. If the content exceeds 1.0%, the carbide is coarsened to serve as fracture origins and also the coarsening of grains is suppressed with the result that cryogenic toughness is lowered. Thus, when niobium is added, the Nb content is limited to 1.0% or less. The Nb content is preferably 0.5% or less. The Nb content is more preferably 0.3% or less. The lower limit is not particularly limited and may be 0%.

### [Al: 0.100% or less]

Aluminum is an element that acts as a deoxidizing agent and is used most commonly in the molten steel deoxidizing process for steel materials. When aluminum is added in order to obtain this effect, the Al content is preferably 0.001% or more. The Al content is more preferably 0.020% or more. The Al content is still more preferably 0.030% or more. If, on the other hand, more than 0.100% aluminum is added, aluminum is mixed into the weld metal portion during the welding process to cause a decrease in the toughness of the weld metal. Thus, when aluminum is added, the Al content is limited to 0.100% or less. The Al content is more preferably 0.060% or less. The Al content is still more preferably 0.040% or less.

### [N: 0.120% or less]

Nitrogen is an element that acts to stabilize austenite phases, and effectively contributes to the enhancement in cryogenic toughness. When nitrogen is added in order to obtain these effects, the N content is preferably 0.005% or more. The N content is more preferably 0.006% or more. The N content is still more preferably 0.020% or more. If, on the other hand, the content exceeds 0.120%, nitrides or carbonitrides are coarsened to cause a decrease in cryogenic toughness. Thus, when nitrogen is added, the N content is limited to 0.120% or less. The N content is preferably 0.040% or less.

### [O (oxygen): 0.0050% or less]

In the steel, oxygen (O) is present as oxide inclusions and lowers the cryogenic toughness of the steel material.
It is therefore preferable to remove as much oxygen (O) as possible. Up to 0.0050% oxygen is acceptable. Thus, when oxygen (O) is present, the O (oxygen) content is limited to the range of 0.0050% or less. The O content is preferably 0.0045% or less. On the other hand, extreme deoxidation to less than 0.0005% oxygen (O) entails prolonged refining and raises the refining cost. Thus, when oxygen (O) is present, the O (oxygen) content is preferably 0.0005% or more from an economical viewpoint. The O content is more preferably 0.0010% or more.

### [B: 0.0020% or less]

Boron is an element that is segregated at grain boundaries and acts to contribute to the enhancement in the toughness of the steel material. When boron is added in order to obtain these effects, the B content is preferably 0.0001% or more. If, on the other hand, the B content exceeds 0.0020%, increased amounts of coarse nitride and carbide are formed to cause a decrease in toughness. Thus, when boron is added, the B content is limited to 0.0020% or less. The B content is preferably 0.0015% or less. The B content is more preferably 0.0010% or less.

### [REM: 0.020% or less]

Through morphological control for inclusions, rare earth metals act to enhance the toughness of the steel material and to enhance ductility and sulfide stress corrosion cracking resistance. When rare earth metals are added in order to obtain the above effects, the REM content is preferably 0.0010% or more. The REM content is more preferably 0.0015% or more. The REM content is still more preferably 0.005% or more. If, on the other hand, the content exceeds 0.020%, the amount of nonmetallic inclusions is increased to cause decreases in toughness, ductility, and sulfide stress cracking resistance. Thus, when rare earth metals are added, the REM content is limited to 0.020% or less.

### [Balance of composition]

The balance after the components described above is Fe and incidental impurities. Examples of the incidental impurities include Ca, Mg, Cu, and Mo. Up to 0.05% incidental impurities in total are acceptable.

### [Fume emission rate]

The metal-cored wire for submerged arc welding of the present invention can weld the cryogenic high-Mn steel material with markedly less fumes. The fume emission rate is evaluated as "low" when the emission rate during welding in accordance with JIS Z3930-2013 is 1200 mg/min or less. The present invention has been shown to be capable of further reducing the fume emission rate to 400 mg/min or less.

### EXAMPLES

### [Welding conditions]

Hereinafter, the present invention will be further described based on EXAMPLES. EXAMPLES below are only illustrative of detailed examples of the present invention and do not limit the scope of the present invention.

Metal-cored wires were fabricated that had a steel sheath and a metal powder included within the steel sheath. The steel sheath material was a steel sheet (thickness: 0.5 mm) that had a composition including, in mass%, 0.1% C, 0.2% Si, 0.5% Mn, and the balance of Fe. The steel sheath material was subjected to cold bending in the width direction to form a U shape. Subsequently, a metal powder (and a flux powder) that had been conditioned so that the wire composition described in Table 1 would be obtained was sealed in the steel sheath. The steel sheath was then cold drawn to give a welding metal-cored wire (diameter: 3.2 mm). The compositions described in Table 1 are each the total of the steel sheath and the metal powder.

Next, workpieces of a cryogenic high-Mn content steel material (thickness: 20 mm) as a test steel material were butted against each other, and a 45° single V groove was formed. Submerged arc welding was performed using the metal-cored wire as the welding material to form a weld metal in the groove. The cryogenic high-Mn content steel material used as the test steel material was a steel material that had a composition including, in mass%, 0.5% C, 0.4% Si, 25% Mn, 0.02% P, 0.01% S, 3% Cr, 2% Ni, 0.040% N, 0.002% O, 0.0002% B, and the balance of Fe (steel material a) or 0.5% C, 0.4% Si, 25% Mn, 0.02% P, 0.01% S, 3% Cr, 2% Ni, 0.003% V, 0.001% Ti, 0.001% Nb, 0.03% Al, 0.040% N, 0.002% O, 0.0001% B, and the balance of Fe (steel material b). At the time of welding, a flux (bonded type) that had a composition including, in mass%, 38% SiO₂, 11% MnO, 8% TiO₂, 16% Al₂O₃, and 27% MgO was used.

In the submerged arc welding, the metal-cored wire (diameter: 3.2 mm) having a composition described in Table 1 was fed in a flat position, and the workpieces were welded without preheating under conditions in which current: 450 to 650 A (AC), voltage: 28 to 36 V, welding speed: 20 cm/min, and interpass temperature: 100 to 150°C.

**[Table 1]**

| Wire No. | Chemical composition (mass%) | | | | | | | | | | | | Remarks |
|---|---|---|---|---|---|---|---|---|---|---|---|---|---|
| | C | Si | Mn | P | S | Ni | Cr | Mo | B | N | V,Ti,Nb | Cu,Al,REM | |
| A | 0.55 | 0.34 | 26.1 | 0.012 | 0.008 | 2.12 | 0.7 | 4.21 | 0.0008 | 0.020 | - | Al :0.010 | INV. EX. |
| B | 0.51 | 0.37 | 20.6 | 0.017 | 0.011 | 3.70 | 1.2 | 6.00 | 0.0006 | 0.083 | - | Al: 0.040, REM:0.011 | INV. EX. |
| C | 0.34 | 0.69 | 21.8 | 0.025 | 0.021 | 5.40 | 3.0 | 4.30 | 0.0008 | 0.015 | Ti: 0.010, Nb: 0.030 | REM:0.018 | INV. EX. |
| D | 0.55 | 0.83 | 21.9 | 0.020 | 0.024 | 1.90 | 1.9 | 7.50 | 0.0007 | 0.029 | Nb: 0.010 | - | INV. EX. |
| E | 0.65 | 0.42 | 23.4 | 0.023 | 0.014 | 3.20 | 0.5 | 4.00 | 0.0007 | 0.058 | - | - | INV. EX. |
| F | 0.63 | 0.43 | 21.5 | 0.021 | 0.023 | 7.80 | 1.2 | 3.70 | 0.0006 | 0.002 | - | Al: 0.050 | INV. EX. |
| G | 0.44 | 0.76 | 19.9 | 0.007 | 0.027 | 5.40 | 0.4 | 8.30 | 0.0008 | 0.096 | - | - | INV. EX. |
| H | 0.59 | 0.33 | 20.9 | 0.018 | 0.006 | 7.10 | 3.4 | 4.10 | 0.0010 | 0.107 | Ti: 0.010 | Al: 0.010 | INV. EX. |
| I | 0.49 | 0.63 | 23.4 | 0.009 | 0.015 | 6.30 | 1.1 | 4.00 | 0.0007 | 0.090 | - | - | INV. EX. |
| J | 0.45 | 0.61 | 21.7 | 0.023 | 0.028 | 2.80 | 4.0 | 8.50 | 0.0007 | 0.019 | V: 0.005 | Cu: 0.10 | INV. EX. |
| K | 0.15 | 0.68 | 18.7 | 0.014 | 0.009 | 4.00 | 3.1 | 8.70 | 0.0008 | 0.113 | - | - | COMP. EX. |
| L | 0.50 | 0.19 | 24.0 | 0.030 | 0.015 | 4.60 | 0.1 | 3.55 | 0.0008 | 0.115 | Ti: 0.010, Nb: 0.005 | Cu: 0.20 | COMP. EX. |
| M | 0.56 | 0.53 | 22.3 | 0.012 | 0.010 | 1.70 | 2.5 | 0.50 | 0.0008 | 0.103 | - | - | COMP. EX. |
| N | 0.54 | 0.73 | 20.9 | 0.024 | 0.008 | 3.00 | 1.9 | 1.15 | 0.0009 | 0.030 | - | - | COMP. EX. |
| O | 0.31 | 0.76 | 15.3 | 0.006 | 0.018 | 2.70 | 0.9 | 6.80 | 0.0010 | 0.031 | - | Al:0.010, REM: 0.003 | COMP. EX. |
| P | 0.82 | 1.21 | 20.1 | 0.022 | 0.017 | 0.80 | 3.2 | 7.30 | 0.0007 | 0.045 | - | - | COMP. EX. |
| Q | 0.85 | 0.36 | 22.3 | 0.045 | 0.025 | 5.30 | 2.6 | 5.20 | 0.0008 | 0.085 | - | - | COMP. EX. |
| R | 0.56 | 0.52 | 23.8 | 0.028 | 0.051 | 4.80 | 1.9 | 8.60 | 0.0006 | 0.090 | - | - | COMP. EX. |
| S | 0.48 | 0.58 | 22.1 | 0.013 | 0.014 | 5.30 | 2.1 | 6.80 | 0.0008 | 0.073 | V:0.005 | - | INV. EX. |
| T | 0.51 | 0.59 | 20.2 | 0.027 | 0.017 | 7.70 | 3.6 | 7.50 | 0.0005 | 0.103 | Nb:0.020 | Al:0.010 | INV. EX. |
| U | 0.55 | 0.37 | 21.1 | 0.011 | 0.018 | 2.10 | 3.0 | 6.10 | 0.0010 | 0.096 | - | Cu:0.50 | INV. EX. |
| V | 0.68 | 0.51 | 20.6 | 0.020 | 0.029 | 2.30 | 0.5 | 12.10 | 0.0008 | 0.042 | - | - | COMP. EX. |

| | | | | | | | | | | | | | |
|---|---|---|---|---|---|---|---|---|---|---|---|---|---|
| Underlines indicate being outside of the range of the present invention. | | | | | | | | | | | | | |

### [Fume emission rate]

In accordance with the provisions of JIS Z3930, the submerged arc welding was performed in a welding fume collector, and the fumes generated were collected with a filter material (made of glass fibers) to measure the fume emission rate (mg/min).

### [Hot cracking resistance]

The weld was analyzed by an X-ray transmission test in accordance with JIS Z3104. The hot cracking resistance was evaluated as "o" when no cracks were found in the weld, and was evaluated as "×" when the weld had been cracked.

### [Mechanical properties of weld metals]

In accordance with the provisions of JIS Z3111, test pieces for tensile test (parallel portion diameter: 6 mmϕ) and Charpy impact test specimens (V-notch) were sampled from the weld metal and were subjected to a tensile test and an impact test.

In the tensile test, three test pieces were tested at room temperature, and the values obtained (0.2% proof stress) were averaged to give a tensile characteristic of the weld metal obtained using the wire.

In the Charpy impact test, three test specimens were tested to measure the absorbed energy (vE-₁₉₆) at a test temperature of -196°C, and the average of the results was taken as the cryogenic impact toughness of the weld metal obtained using the wire. The V-notch in the Charpy impact test specimens was at the center of the weld metal and was 1/2 thickness deep.

The results obtained are described in Table 2.

**[Table 2]**

| Joint No. | Wire No. | Steel material No. | Hot cracking resistance | Fume emission rate (mg/min) | Deposited metal properties* | | Remarks |
|---|---|---|---|---|---|---|---|
| | | | | | 0.2% Proof stress (MPa) | Absorbed energy vE₋₁₉₆(J) | |
| 1 | A | a | ○ | 331 | 401 | 54 | INV. EX. |
| 2 | B | a | ○ | 282 | 434 | 68 | INV. EX. |
| 3 | C | a | ○ | 292 | 433 | 73 | INV. EX. |
| 4 | D | b | ○ | 276 | 417 | 65 | INV. EX. |
| 5 | E | b | ○ | 270 | 496 | 71 | INV. EX. |
| 6 | F | b | ○ | 252 | 494 | 70 | INV. EX. |
| 7 | G | b | ○ | 359 | 442 | 78 | INV. EX. |
| 8 | H | a | ○ | 367 | 437 | 55 | INV. EX. |
| 9 | I | a | ○ | 356 | 499 | 75 | INV. EX. |
| 10 | J | a | ○ | 338 | 507 | 68 | INV. EX. |
| 11 | K | a | ○ | 268 | 387 | 76 | COMP. EX. |
| 12 | L | b | ○ | 261 | 378 | 77 | COMP. EX. |
| 13 | M | b | ○ | 361 | 380 | 79 | COMP. EX. |
| 14 | N | b | ○ | 298 | 369 | 61 | COMP. EX. |
| 15 | O | a | ○ | 355 | 461 | 24 | COMP. EX. |
| 16 | P | a | × | 349 | 480 | 54 | COMP. EX. |
| 17 | Q | b | × | 349 | 466 | 78 | COMP. EX. |
| 18 | R | b | × | 309 | 424 | 55 | COMP. EX. |
| 19 | S | b | ○ | 323 | 481 | 79 | INV. EX. |
| 20 | T | a | ○ | 377 | 505 | 55 | INV. EX. |
| 21 | U | a | ○ | 312 | 460 | 57 | INV. EX. |
| 22 | V | a | ○ | 306 | 561 | 15 | COMP. EX. |

| | | | | | | | |
|---|---|---|---|---|---|---|---|
| Underlines indicate being outside of the range of the present invention. *)In accordance with JIS Z 3111 | | | | | | | |

In the joint production in INVENTIVE EXAMPLES, the fume emission rate was very low and was 400 mg/min or less.

The joints No. 1 to No. 10 and No. 19 to No. 21 in INVENTIVE EXAMPLES had a yield strength (0.2% proof stress) at room temperature of 400 MPa or more and an absorbed energy (vE-₁₉₆) of 28 J or more in a Charpy impact test at a test temperature of -196°C. It was thus shown that the welding materials were capable of forming a weld metal having high strength and also excellent cryogenic toughness even when the welding involved a large heat input.

In contrast, COMPARATIVE EXAMPLES falling outside the scope of the present invention failed to produce a desired weld metal having high strength and excellent cryogenic toughness at the same time while realizing a low fume emission rate during welding. Specifically, the hot cracking resistance was low and weld cracking (hot cracking) occurred, or the 0.2% proof stress at room temperature was less than 400 MPa or the absorbed energy (vE-₁₉₆) was less than 28 J.

In the joints No. 11, No. 12, No. 13, and No. 14 (COMPARATIVE EXAMPLES), the weld metals had a 0.2% proof stress of less than 400 MPa and failed to ensure the desired high strength because the amounts of C, Cr, and Mo were below the ranges of the present invention. In the wire No. 15 (COMPARATIVE EXAMPLE), the Mn content was below the range of the present invention. As a result, the stability of austenite phases was low and the absorbed energy (vE-₁₉₆) was less than 28 J, indicating low cryogenic toughness. Furthermore, the joints No. 16, No. 17, and No. 18 (COMPARATIVE EXAMPLES) had low hot cracking resistance and suffered weld cracking because the amounts of Si, P, C, and S were above the ranges of the present invention. In the joint No. 22 (COMPARATIVE EXAMPLE), the cryogenic toughness was low and the absorbed energy (vE-₁₉₆) was less than 28 J because the amount of Mo was above the range of the present invention.

## Claims

1. A metal-cored wire for submerged arc welding having a composition comprising, in mass%:
C: 0.20 to 0.80%,
Si: 0.15 to 0.90%,
Mn: 17.0 to 28.0%,
P: 0.030% or less,
S: 0.030% or less,
Ni: 0.01 to 10.00%,
Cr: 0.4 to 4.0%,
Mo: 3.50 to 10.00%,
B: 0.0010% or less, and
N: 0.200% or less, the balance being Fe and incidental impurities.

2. The metal-cored wire for submerged arc welding according to claim 1, wherein the composition further comprises, in mass%, one, or two or more selected from:
V: 0.040% or less,
Ti: 0.040% or less, and
Nb: 0.040% or less.

3. The metal-cored wire for submerged arc welding according to claim 1 or 2, wherein the composition further comprises, in mass%, one, or two or more selected from:
Cu: 1.00% or less,
Al: 0.100% or less, and
REM: 0.020% or less.

4. A submerged arc welding method comprising welding workpieces of a steel material with the metal-cored wire for submerged arc welding described in any one of claims 1 to 3, the steel material being a high-Mn steel having a composition comprising, in mass%:
C: 0.20 to 0.80%,
Si: 0.15 to 0.90%,
Mn: 15.0 to 30.0%,
P: 0.030% or less,
S: 0.030% or less,
Ni: 3.00% or less, and
Cr: 1.0 to 8.0%, the balance being Fe and incidental impurities,
the steel material having an absorbed energy at -196°C of 28 J or more and a 0.2% proof stress of 400 MPa or more.

5. The submerged arc welding method according to claim 4, wherein the composition of the steel material further comprises, in mass%, one, or two or more selected from:
V: 2.0% or less,
Ti: 1.0% or less,
Nb: 1.0% or less,
Al: 0.100% or less,
N: 0.120% or less,
O: 0.0050% or less,
B: 0.0020% or less, and
REM: 0.020% or less.

6. The submerged arc welding method according to claim 4 or 5, wherein the fume emission rate during the submerged arc welding is 400 mg/min or less.
